(19) Europäisches Patentamt
European Patent Office
Office européen des brevets

(11) **EP 3 327 523 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(51) Int Cl.:
***G05B 19/18*** *(2006.01)*

(21) Anmeldenummer: **17203555.2**

(22) Anmeldetag: **24.11.2017**

(54) **WERKZEUGMASCHINE MIT NENNMASSERMITTLUNG**

MACHINE TOOL WITH NOMINAL DIMENSIONS DETECTION

MACHINE-OUTIL À DÉTERMINATION DE DIMENSIONS NOMINALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2016 DE 202016106623 U**

(43) Veröffentlichungstag der Anmeldung:
**30.05.2018 Patentblatt 2018/22**

(73) Patentinhaber: **WZT**
**Wendland-Zerspanungs-Technik GmbH**
**29456 Hitzacker (DE)**

(72) Erfinder: **Prahler, Ralf**
**29481 Karwitz (DE)**

(74) Vertreter: **Raffay & Fleck**
**Patentanwälte**
**Grosse Bleichen 8**
**20354 Hamburg (DE)**

(56) Entgegenhaltungen:
**EP-A1- 0 498 900       EP-A1- 2 481 521**
**CN-A- 105 964 873**

EP 3 327 523 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Anmeldung betrifft eine Werkzeugmaschine. Es ist bekannt, Halbzeuge oder Blanks, insbesondere für Umformprozesse mit vorgegebener Materialmenge, Materialvolumen und/oder vorgegebenem Materialgewicht zu fertigen. Dazu werden beispielsweise Halbzeuge gewogen und aus dem Gewicht errechnet, wie das Halbzeug weiter vorbereitet werden muss, bevor es dem Umformerprozess zugeführt wird. Dazu sind auch automatische Fertigungslinien bekannt, die, beispielsweise aus Rundrohren, Abschnitte sägen, diese verwiegen und in eine Drehmaschine aufnehmen und einspannen und abhängig vom bestimmten Gewicht abdrehen, sodass am Ende ein vorgegebenes Gewicht innerhalb einer vorgegebenen Toleranz erreicht wird. Dieses so entstandene Halbzeug wird dann einem Umformprozess, beispielsweise zur Produktion von Käfigen für Kugellager, zugeführt.

Auch ist es aus der EP 1 983 393 A2 und der US 2009/143885 A1 bekannt, Aufspannsituationen aufwendig dreidimensional zu erfassen und einen Fertigungsplan auf die erfasste Situation abzustimmen oder das zu erzeugende Werkstück in dem erfassten Rohling zu positionieren.

Ebenso ist aus der CN 105 964 873 eine Vorrichtung bekannt, die die Länge eines Rundstabes derart schneidet, dass der geschnittene Rundstab unter Berücksichtigung eines gemessenen Durchmessers und vorgegebene Dichte eine gewünschtes Volumen des Rundstabs erreicht wird. Ebenso ist aus der EP 0 498 900 A1 ein Verfahren bekannt, bei welchem zunächst der Durchmesser eines Rundstabes mithilfe einer Meßlehre ermittelt wird, und daraufhin der Rundstab in eine weitere Maschine gebracht wird und dort unter Berücksichtigung der Spanabnahme das Werkstück bis zum Erreichens eines SollDurchmessers spanend bearbeitet wird.

Aufgabe der vorliegenden Anmeldung ist es, eine Vorrichtung und ein Verfahren anzugeben, die die Herstellung, insbesondere von Halbzeugen, insbesondere zur anschließenden Umformung, insbesondere nach DIN 8582 bis 8587, vereinfachen, beschleunigen und verbessern können. Gelöst wird die Aufgabe insbesondere durch eine Vorrichtung gemäß Anspruch 1 und ein Verfahren gemäß Anspruch 9. Die abhängigen Ansprüche geben vorteilhafte Weiterbildungen an.

Dies erfolgt basierend auf der Grundidee, dass ein Wiegen für das geforderte Ergebnis nicht notwendig ist, da das spezifische Materialgewicht bekannt ist und es beim Umformen ohnehin eher auf das Materialvolumen des Halbzeugs ankommt, als auf dessen Gewicht. Die Grundidee verwirklicht sich also darin, dass im eingespannten Zustand oder beim Einspannen des Werkstücks mindestens ein erstes Maß, insbesondere ein erster Durchmesser, bestimmt wird und basierend zumindest auf diesem, wahlweise aber auch auf Grundlage anderer Messwerte, Randbedingungen und/oder Vorgaben, und dem vorgegebenen Materialvolumen mindestens ein Sollmaß, insbesondere eine Solllänge und/oder ein Solldurchmesser, berechnet wird und das Werkstück sodann spanend bearbeitet wird, bis das mindestens eine Sollmaß, insbesondere die Solllänge und/oder der mindestens eine Solldurchmesser, erreicht ist. Eine erfindungsgemäße Vorrichtung ist entsprechend eingerichtet. Bei der Vorrichtung handelt es sich insbesondere um eine Dreh- und/oder Fräsmaschine.

Gelöst wird die Aufgabe durch eine Vorrichtung zum spanenden Bearbeiten eines Werkstücks, nämlich eines Rundstabs, und/oder Rundrohrs, unter Berücksichtigung eines vorgegebenen Materialvolumens, insbesondere zur Herstellung von Halbzeugen, insbesondere zur anschließenden Umformung, insbesondere nach DIN 8582 bis 8587.

Insbesondere sind metallische Werkstücke bevorzugt.

Die Vorrichtung beinhaltet eine Einspannvorrichtung zum Einspannen des Werkstücks und eine Vorrichtung zum Messen mindestens eines ersten Maßes des Werkstücks beim Einspannen in die Einspannvorrichtung oder im in der Einspannvorrichtung eingespannten Zustand.

Die Einspannvorrichtung kann beispielsweise Spannbacken beinhalten, die beispielsweise aufeinander zu und/oder voneinander weg bewegt werden können, beispielsweise zum Innenspannen oder Außenspannen.

Die Messung in der Vorrichtung oder dem Verfahren des mindestens eines einen ersten Maßes kann dabei auf verschiedenste Art vorgenommen werden. Insbesondere wird sie durch Mittel der Einspannvorrichtung oder an der Einspannvorrichtung realisiert. Insbesondere wird sie durch Mittel, die den Verschiebeweg von Spannbacken der Einspannvorrichtung ermitteln, durchgeführt. Mit Vorteil sind solche Mittel dementsprechend in der Vorrichtung enthalten.

Es ist aber auch denkbar, insbesondere zusätzlich, kontaktlose Messvorrichtungen, wie beispielsweise laserbasierte Messvorrichtungen vorzusehen, um mindestens ein Maß des mindestens einen ersten Maßes zu bestimmen, die insbesondere an der Einspannvorrichtung angebracht oder Teil dieser sind.

Die Vorrichtung beinhaltet des Weiteren eine Rechenvorrichtung eingerichtet zum Berechnen mindestens eines Sollmaßes, insbesondere eines Solldurchmessers und/oder einer Solllänge basierend zumindest auf dem mindestens einen gemessenen ersten Maß und dem vorgegebenen Materialvolumen.

Das vorgegebene Materialvolumen der Vorrichtung und/oder des Verfahrens kann auf verschiedenste Art vorgegeben sein oder werden. Die Vorrichtung kann beispielsweise ein Eingabemittel vorsehen, um ein Materialvolumen durch Eingabe vorzugeben. Es kann aber auch an die Vorrichtung übertragen werden, beispielsweise drahtlos. Die Vorrichtung kann eine entsprechende Schnittstelle aufweisen.

Die Berechnung und/oder die Rechenvorrichtung der Vorrichtung und/oder des Verfahrens ist so ausgebildet, dass das Werkstück, wenn es auf das mindestens eine Sollmaß gebracht wurde, das vorgegebene Materialvolumen aufweist. Dabei können bei der Berechnung weitere Vorgaben, beispielsweise als vorgegebene Sollmaße, und/oder Randbedingungen, beispielsweise Ober- und/oder Untergrenzen mindestens eines Sollmaßes, derart berücksichtigt werden, dass diese eingehalten werden und/oder dass das Werkstück, wenn es auf das mindestens eine Sollmaß gebracht wurde und die weiteren Vorgaben aufweist und/oder Randbedingungen einhält, das vorgegebene Materialvolumen aufweist. Vorgaben und/oder Randbedingungen sind insbesondere durch Eigenschaften des Werkstücks vor der Bearbeitung, wie mindestens eines Ausmaßes des Werkstücks, gegeben und/oder von diesen abgeleitet. So kann beispielsweise ein Maß des Werkstücks, beispielsweise ein Außendurchmesser und/oder eine Länge unverändert bleiben und als Vorgabe in die Berechnung einfließen und/oder ein Maß des Werkstücks, beispielsweise ein Außendurchmesser und/oder eine Länge nach der Bearbeitung nicht über-/oder unterschritten werden und als Randbedingung in die Berechnung einfließen.

Das Materialvolumen weist das bearbeitete Werkstück auch auf, wenn es dieses theoretisch, insbesondere basierend auf einer zur Berechnung verwendeten Formel, und/oder näherungsweise aufweist. So kann beispielsweise davon ausgegangen werden, dass ein Durchmesser über eine oder die gesamte Länge des Werkstücks konstant ist. Weicht er in der Praxis leicht ab, ist das Materialvolumen dennoch als erfüllt anzusehen. Als Maß zur Beurteilung, ob das bearbeitete Werkstück das Materialvolumen aufweist ist insbesondere auf die verwendete Messgenauigkeit und/oder die Näherung, die durch die verwendete Berechnung und/oder Formel gegeben ist.

Die Berechnung im Rahmen der Verfahren und/oder der Vorrichtung kann dabei auf verschiedenste Arten ausgestaltet sein. So kann beispielsweise mindestens eine Formel für das Materialvolumen vorgegeben sein und/oder genutzt werden, die mehrere Variablen aufweist, unter denen das mindestens eine erste Maß ist, insbesondere ein Durchmesser. Dieses ist insbesondere derart möglich, dass die Formel zur Berechnung und/oder Bestimmung des mindestens einen Sollmaßes (Sollmaße 1 bis m) bei Vorgabe des Materialvolumens sowie ggf. weiterer Vorgaben (weitere Vorgaben 1 bis k) und Nutzung des mindestens einen ersten Maßes (erstes Maß 1 bis n) genutzt werden kann, genutzt ist und/oder geeignet ist. Die Formel kann beispielsweise lauten:

Materialvolumen(erstes Maß ... erstes $Maß_n$, $Sollmaß_1$ ... $Sollmaß_m$, $Vorgabe_1$ ... $Vorgabe_k$), also eine Formel zur Berechnung des Materialvolumens abhängig von erstem Maß bis erstem $Maß_n$, $Sollmaß_1$ bis $Sollmaß_m$ und $Vorgabe_1$ bis $Vorgabe_k$ Konkret kann sie beispielsweise lauten:

$$\text{Materialvolumen} = \text{Konstante} \times \text{Länge} \times (\text{zweiter Durchmesser}^2 - \text{erster Durchmesser}^2)$$

Dabei ist der zweite Durchmesser insbesondere ein Außendurchmesser und der erste Durchmesser insbesondere ein Innendurchmesser. Dabei kann die Länge ein erstes Maß und/oder ein Sollmaß sein. Dabei kann erste Durchmesser ein erstes Maß, eine Vorgabe, ein zweiter Durchmesser und/oder eine Sollmaß sein. Dabei kann der zweite Durchmesser ein erstes Maß eine Vorgabe, ein zweiter Durchmesser und/oder eine Sollmaß sein. Jedoch ist zumindest eins der drei ein erstes Maß und eins ein Sollmaß.
Oder

$$\text{Materialvolumen} = \text{Konstante} \times \text{Länge} \times \text{erster Durchmesser}^2$$

Dabei ist der erste Durchmesser insbesondere ein Außendurchmesser. Dabei kann die Länge ein erstes Maß und/oder ein Sollmaß sein. Dabei kann erste Durchmesser ein erstes Maß, eine Vorgabe und/oder eine Sollmaß sein. Jedoch ist zumindest eins der zwei ein erstes Maß und eins ein Sollmaß.

In beiden Fällen ist beispielsweise der erste Durchmesser ein erstes Maß und der zweite Durchmesser ein Sollmaß, insbesondere bei Hohlprofilen. Bei Vollprofilen ist insbesondere der zweite Durchmesser ein erstes Maß und die Länge ein Sollmaß.

Die Formel muss dabei kein eindeutiges Ergebnis liefern, sondern kann unterbestimmt sein. Bei diesen Formeln und auch generell können Randbedingungen als Vorgaben, insbesondere als Ober- und/oder Untergrenzen für mindestens ein Sollmaß berücksichtigt, gegeben und/oder verwendet werden.

Bei einfachen geometrischen Formen bleiben dann in der Regel noch ein bis zwei weitere Variablen offen, beispielsweise ein zweiter Durchmesser und eine Länge. Jede dieser Variablen kann entweder ein Sollmaß oder ein erstes Maß darstellen. Bezüglich Variablen, die ein Sollmaß darstellen, können Randbedingungen oder andere Bedingungen vorgegeben und/oder andere Variablen und/oder auch Randbedingungen können durch weitere Messungen ermittelt werden. So kann beispielsweise die Länge des Werkstücks vorgegeben sein. Auch können Randbedingungen, beispielsweise Ober- und/oder Untergrenzen für Maße und/oder Variablen, insbesondere Solllänge und/oder einen zweiten Durchmesser und/oder Sollaußendurchmesser, vorgegeben oder durch Messungen bestimmt werden. Diese Ober- und/oder Untergrenzen können beispielsweise aus Erfahrungswerten oder Toleranzen des vorausgehenden Fertigungsverfahrens abgeleitet sein oder werden oder sich aus Messungen ergeben, beispielsweise solchen, die feststellen, wieviel Material in jedem Fall zumindest vorhanden ist. So kann beispielsweise der minimale Außendurchmesser des Werkstücks gemessen werden, und als Randbedingung für den Sollaußendurchmesser oder für die Bestimmung einer Randbedingung für den Sollaußendurchmesser herangezogen werden. Denn der Sollaußendurchmesser kann durch spannendes Bearbeiten nicht größer realisiert werden als der (an der jeweiligen Stelle) minimale Außendurchmesser des verwendeten Werkstücks.

Insbesonders wird häufig mit der Annahme gearbeitet, dass ein gemessenes Maß, insbesondere ein Durchmesser, über eine gewisse Länge, insbesondere die Länge des Werkstücks, konstant ist. In weiter verfeinerten Verfahren oder Vorrichtungen können über die Länge auch mehrere Maße, beispielsweise Durchmesser, bestimmt werden und so eine noch genauere Bearbeitung und Berechnung erfolgen. Die Formel wird dann entsprechend erweitert, beispielsweise durch eine Aufsummierung von Teilvolumen über Teillängen, beispielsweise bei zwei Teillängen:

$$\text{Materialvolumen} = \text{Teilvolumen der ersten Teillänge} + \text{Teilvolumen der zweiten Teillänge}$$

wobei sich die Teilvolumen beispielsweise bestimmen durch

$$\text{Teilvolumen} = \text{Konstante} \times \text{Teillänge} \times (\text{zweiter Durchmesser auf der Teillänge}^2 - \text{erster Durchmesser der Teillänge}^2)$$

Die Vorrichtung beinhaltet auch eine Ansteuervorrichtung sowie Spanmittel, unter denen auch eine Zerspaneinrichtung und/oder eine Spaneinrichtung zu verstehen ist, wobei die Ansteuervorrichtung eingerichtet ist, die Spanmittel so anzusteuern, dass eine spanendes Bearbeiten des Werkstücks bis zum Erreichen des mindestens einen Sollmaßes, insbesondere der berechneten Solllänge und/oder des berechneten Solldurchmessers, durchgeführt wird.

Als Spanmittel kommen beispielsweise ein Werkzeugträger zur Aufnahme mindestens eines zerspanenden Werkzeugs, mindestens ein zerspanendes Werkzeuge, Antriebsmittel zum Rotieren des Werkstücks und/oder mindestens eine Verschiebeeinrichtung zum Verschieben mindestens eines zerspanenden Werkzeuges oder zum Verschieben mindestens eines Werkzeugträgers zur Aufnahme mindestens eines zerspanenden Werkzeuges, wie beispielsweise eine Verschiebetisch, in Betracht.

Dabei ist die Vorrichtung und/oder die Ansteuervorrichtung insbesondere so eingerichtet, dass die spanende Bearbeitung des Werkstücks durchgeführt wird während das Werkstück in der Einspannvorrichtung eingespannt ist, insbesondere ohne es zwischen dem Messen des mindestens einen ersten Maßes auszuspannen und oder ohne es zwischen dem Messen des mindestens einen ersten Maßes umzuspannen.

Prinzipiell können durch die spanende Bearbeitung verschiedene Maße beeinflusst werden, insbesondere Länge und Außendurchmesser oder Länge und Innendurchmesser. Es ist jedoch auch denkbar, dass nur weniger Maße, beispielsweise nur die Länge und/oder ein Durchmesser beeinflusst werden. Insbesondere werden alle des mindestens einen Sollmaß eingestellt, das Werkstück also so bearbeitet, dass es alle des mindestens einen Sollmaß aufweist.

Entsprechend ist es ebenfalls vorstellbar, verschiedene Maße zu berechnen, mehrere oder auch nur eins. Insbesondere werden nur solche Maße berechnet, die auch beeinflusst werden.

Mit besonderem Vorteil ist die Vorrichtung zum Messen so eingerichtet , dass mindestens eins des mindesten einen ersten Maßes, insbesondere der erste Durchmesser, durch und/oder über die Bewegung von mindestens einem Spannmittel und/oder des Spannantriebs der Einspannvorrichtung ermittelt wird.

Dies kann beispielsweise durch Messen der Bewegung mindestens eines Spannmittels und/oder Spannantriebs oder durch Messen mindestens eines Abstandes zwischen jeweils zwei Spannmitteln erfolgen. Dies kann beispielsweise direkt an mindestens einem Spannmittel aber auch indirekt, beispielsweise über Messen an mindestens einem Antrieb und/oder Aktuator eingerichtet zum Bewegen mindestens eines der Spannmittel, insbesondere der Spannmittel, oder an zwischen Antrieb und Spannmittel geschalteten Elementen, wie beispielsweise Getriebe, Zylinder, Feder und/oder Umlenkung erfolgen. Beispielsweise ist ein Messen an einem Spannzylinder der Einspannvorrichtung denkbar. Die Vorrichtung zum Messen mindestens eines ersten Maßes des Werkstücks weist insbesondere Mittel auf, eingerichtet durch und/oder über die Bewegung mindestens eines Spannmittels der Einspannvorrichtung das Messen des mindestens eines ersten Maßes vorzunehmen. Dabei kommt es nicht darauf an, dass die Bewegung des mindestens einen Spannmittels erfasst oder gemessen wird. Das Messen des mindestens einen ersten Maßes über und/oder durch die Bewegung der Spannmittel setzt insbesondere allein voraus, dass das Messen des mindestens einen ersten Maßes nicht ohne die Bewegung des mindestens einen Spannmittel erfolgen kann. Die Vorrichtung zum Messen mindestens eines ersten Maßes des Werkstücks ist insbesondere so eingerichtet, dass das Messen des mindestens einen ersten Maßes nicht ohne die Bewegung des mindestens einen Spannmittels erfolgen kann. Mit Vorteil setzt das Messen des mindestens einen ersten Maßes voraus und/oder ist die Vorrichtung zum Messen mindestens eines ersten Maßes des Werkstücks so eingerichtet, dass die Spannmittel gegen das Werkstück gedrückt, gezogen und/oder mit diesem zumindest in Kontakt gebracht werden und/oder die Lage des mindestens einen Spannmittels in Kontakt mit dem Werkstück direkt und/oder indirekt Einfluss auf das Messen des mindestens einen ersten Maßes nimmt, insbesondere einen Endpunkt der Messen des mindestens einen ersten Maßes definiert und/oder ein Endpunkt der Messen des mindestens einen ersten Maßes ist. Als Mittel zur letztendlichen Durchführung der Messung können zum Beispiel Dehnungsmessstreifen, berührungslose Abstandsmesssysteme, optische Erfassungsvorrichtungen, induktive Erfassungsvorrichtungen und/oder kapazitive Erfassungsvorrichtungen verwendet und/oder vorgesehen sein. Mit besonderem Vorteil beinhaltet das mindestens eine erste Maß einen ersten Durchmesser des Werkstücks, insbesondere Rundrohrs und/oder Rundstabs.

Erfindungsgemäß beinhaltet das spanende Bearbeiten ein Bearbeiten der Länge und/oder eines zweiten Durchmessers des Werkstücks.

Mit besonderem Vorteil ist der erste Durchmesser ein Innendurchmesser und/oder der zweite Durchmesser ein Außendurchmesser und/oder der Sollmesser ein Außendurchmesser.

Mit besonderem Vorteil sind die Einspannvorrichtung und die Vorrichtung zum Messen so eingerichtet, dass die Vorrichtung zum Messen mindestens ein Maß des mindestens einen ersten Maßes, insbesondere den erste Durchmesser, an den Wandungen misst, an denen das Einspannen erfolgt.

Mit besonderem Vorteil ist das Einspannen ein Innenspannen.

Mit besonderem Vorteil ist die Vorrichtung so eingerichtet, dass eine Solllänge des Werkstücks vorgegeben ist oder vorgegeben werden kann und der zweite Durchmesser ein Außendurchmesser ist und die Rechenvorrichtung eingerichtet ist, die vorgegebene Solllänge beim Berechnen des Solldurchmessers zu berücksichtigen.

Mit besonderem Vorteil ist der zweite Durchmesser ein Außendurchmesser und ist die Vorrichtung so eingerichtet, dass ein Sollaußendurchmesser des Werkstücks vorgegeben ist oder werden kann und der vorgegebene Sollaußendurchmesser beim Berechnen der Länge berücksichtigt wird.

Mit besonderem Vorteil ist die Vorrichtung eingerichtet, einen mindestens zweiten Durchmesser des Werkstücks und/oder die Länge des Werkstücks im eingespannten Zustand zu messen und die Rechenvorrichtung eingerichtet, bei der Berechnung den mindestens einen zweiter Durchmesser des Werkstücks und/oder die Länge des Werkstücks zu berücksichtigen, insbesondere als Variable in mindestens einer das Volumen des Werkstücks oder der Zielgeometrie beschreibenden Formel.

Mit besonderem Vorteil ist die Rechenvorrichtung eingerichtet, bei der Berechnung mindestens einen zweiten Durchmesser des Werkstücks und/oder die Länge des Werkstücks bei der Berechnung des mindestens einen Sollmaßes als Ober- und/oder Untergrenze und/oder Randbedingung, insbesondere des Solldurchmessers und/oder einer Solllänge als jeweilige Ober- und/oder Untergrenze, zu berücksichtigen, insbesondere für mindestens eine Variable in mindestens einer das Volumen des Werkstücks oder der Zielgeometrie beschreibenden Formel.

Mit besonderem Vorteil ist die Vorrichtung eingerichtet, mehrere erste Durchmesser über die Länge des Werkstücks und/oder mehrere zweite Durchmesser über die Länge des Werkstücks zu bestimmen und insbesondere die Rechenvorrichtung eingerichtet, bei der Berechnung des mindestens einen Sollmaßes als Ober- und/oder Untergrenze, insbesondere des Solldurchmessers und/oder einer Solllänge als jeweilige Ober- und/oder Untergrenze, zu berücksichtigen, insbesondere für mindestens eine Variable in mindestens einer das Volumen des Werkstücks oder der Zielgeometrie beschreibenden Formel.

Durch eine derartige Vorrichtung lässt sich auf einfache, schnelle und zuverlässige sowie kostengünstige Art und Weise und je nach Ausprägung des Materials sparsam und verschleißarm die Herstellung von Halbzeugen mit gleichem Materialvolumen erreichen.

Gelöst wird die Aufgabe durch ein erfindungsgemäßes Verfahren, insbesondere zur Herstellung von Halbzeugen, insbesondere zur anschließenden Umformung, insbesondere nach DIN 8582 bis 8587. Dabei lassen sich alle vorteilhaften Ausbildungen der Vorrichtung verfahrensgemäß auch im Verfahren umsetzen und alle vorteilhaften Ausprägungen des Verfahrens vorderster Weise auch vorrichtungsgemäß in der Vorrichtung umsetzen.

Verfahrensgemäß wird die Aufgabe gelöst durch ein Verfahren zum Bearbeiten eines Werkstücks, insbesondere Stabs, Rundstabs, Rundrohrs und/oder Rohrs, unter Berücksichtigung eines vorgegebenen Materialvolumens gemäß Anspruch 9, zumindest beinhaltend die folgenden Schritte:

a. Einspannen des Werkstücks
b. Messen mindestens eines ersten Maßes des Werkstücks beim Einspannen oder im eingespannten Zustand
c. Berechnen mindestens eines Sollmaßes, insbesondere mindestens eines Solldurchmessers und/oder einer Solllänge, basierend zumindest auf dem gemessenen mindestens einen ersten Maß und dem vorgegebenen Materialvolumen

d. Spanendes Bearbeiten des Werkstücks bis zum Erreichen des mindestens einen berechneten Sollmaßes, insbesondere der berechneten Solllänge und/oder des berechneten Solldurchmessers.

Das Einspannen kann beispielsweise durch das Bewegen von Spannbacken erfolgen, die beispielsweise aufeinander zu und/oder voneinander weg bewegt werden, beispielsweise durch Innenspannen oder Außenspannen.

Das Messen kann dabei auf verschiedenste Art vorgenommen werden. Insbesondere wird es durch Mittel zum Einspannen des Werkstücks oder an Mitteln zum Einspannen des Werkstücks realisiert. Insbesondere wird es durch Ermitteln mindestens eines Verschiebewegs mindestens einer Spannbacke zum Einspannen des Werkstücks durchgeführt. Es ist aber auch denkbar, alternativ oder zusätzlich kontaktlose Messvorrichtungen, wie beispielsweise laserbasierte Messvorrichtungen vorzusehen, die insbesondere an der Einspannvorrichtung angebracht oder Teil dieser sind.

Das spanende Bearbeiten kann insbesondere mit einer Dreh- und/oder Fräsmaschine durchgeführt werden. Insbesondere erfolgt auch das Einspannen in die Dreh- und/oder Fräsmaschine. Insbesondere wird das Werkstück ohne Um- und/oder ohne Ausspannen nach dem Einspannen spanend bearbeitet. Zwischen dem Messen des mindestens einen ersten Maßes und dem spanenden Bearbeiten wird das Werkstück insbesondere nicht um- und/oder nicht ausgespannt.

Vorteilhafterweise wird zumindest ein erstes des mindestens einen ersten Maßes, insbesondere der erste Durchmesser durch und/oder über die Bewegung von mindestens einem Einspannen verwendeten Spannmittel und/oder Spannantrieb ermittelt. Dieses Ermitteln kann beispielsweise durch Messen der Bewegung mindestens eines Spannmittels und/oder Spannantriebs oder durch Messen mindestens eines Abstandes zwischen jeweils zwei Spannmitteln erfolgen. Dies kann beispielsweise direkt an mindestens einem Spannmittel aber auch indirekt, beispielsweise über Messen an mindestens einem Antrieb und/oder Aktuator eingerichtet zum Bewegen mindestens eines der Spannmittel, insbesondere der Spannmittel, oder an zwischen Antrieb und Spannmittel geschalteten Elementen, wie beispielsweise Getriebe, Zylinder, Feder und/oder Umlenkung erfolgen. Beispielsweise ist ein Messen an einem Spannzylinder der Einspannvorrichtung denkbar. Dabei kommt es nicht darauf an, dass die Bewegung des mindestens einen Spannmittels erfasst oder gemessen wird. Das Messen des mindestens einen ersten Maßes über und/oder durch die Bewegung der Spannmittel setzt insbesondere allein voraus, dass das Messen des mindestens einen ersten Maßes nicht ohne die Bewegung des mindestens einen Spannmittel erfolgen kann. Mit Vorteil setzt das Messen des mindestens einen ersten Maßes voraus, dass die Spannmittel gegen das Werkstück gedrückt, gezogen und/oder mit diesem zumindest in Kontakt gebracht werden und/oder die Lage des mindestens einen Spannmittels in Kontakt mit dem Werkstück direkt und/oder indirekt Einfluss auf das Messen des mindestens einen ersten Maßes nimmt, insbesondere einen Endpunkt des Messens des mindestens einen ersten Maßes definiert und/oder ein Endpunkt der Messen des mindestens einen ersten Maßes ist. Als Mittel zur letztendlichen Durchführung der Messung können zum Beispiel Dehnungsmessstreifen, berührungslose Abstandsmesssysteme, optische Erfassungsvorrichtungen, induktive Erfassungsvorrichtungen und/oder kapazitive Erfassungsvorrichtungen verwendet und/oder vorgesehen sein.

Vorteilhafterweise ist das erste Maß ein ersten Durchmessers des Werkstücks, insbesondere Rundrohrs und/oder Rundstabs.

Vorteilhafterweise ist das spanende Bearbeiten ein Bearbeiten der Länge und/oder eines zweiten Durchmessers des Werkstücks ist.

Vorteilhafterweise ist der erste Durchmesser ein Innendurchmesser und/oder der zweite Durchmesser ein Außendurchmesser.

Vorteilhafterweise wird der erste Durchmesser an den Wandungen gemessen, an denen das Einspannen erfolgt.

Vorteilhafterweise ist das Einspannen ein Innenspannen.

Vorteilhafterweise wird oder ist die Solllänge des Werkstücks vorgegeben und ist der zweite Durchmesser ein Außendurchmesser und wird die vorgegebene Solllänge beim Berechnen des mindestens einen Sollmaßes, insbesondere des Sollaußendurchmessers berücksichtigt, insbesondere als eine dadurch gegebene Variable in mindestens einer das Volumen des Werkstücks oder der Zielgeometrie beschreibenden Formel.

Vorteilhafterweise ist der zweite Durchmesser ein Außendurchmesser und ist oder wird ein Sollaußendurchmesser des Rundstabs vorgegeben und der vorgegebene Außendurchmesser beim Berechnen der Solllänge berücksichtigt, insbesondere als eine dadurch gegebene Variable in mindestens einer das Volumen des Werkstücks oder der Zielgeometrie beschreibenden Formel.

Vorteilhafterweise wird mindestens ein zweiter Durchmesser des Rundstabs und/oder die Länge des Rundstabs im eingespannten Zustand gemessen und bei der Berechnung des mindestens einen Sollmaßes berücksichtigt, insbesondere als mindestens eine dadurch gegebene Variable in mindestens einer das Volumen des Werkstücks oder der Zielgeometrie beschreibenden Formel.

Vorteilhafterweise wird mindestens ein zweiter Durchmesser des Rundstabs und/oder die Länge des Rundstabs bei dem Berechnen des Solldurchmessers und/oder einer Solllänge als jeweilige Ober- und/oder Untergrenze berücksichtigt, insbesondere als mindestens eine dadurch gegebene Variable in mindestens einer das Volumen des Werkstücks oder der Zielgeometrie beschreibenden Formel.

Vorteilhafterweise werden mehrere erste Durchmesser über die Länge des Rundstabes und/oder mehrere zweite Durchmesser über die Länge des Rundstabes bestimmt, insbesondere als mindestens eine dadurch gegebene Variable in mindestens einer das Volumen des Werkstücks oder der Zielgeometrie beschreibenden Formel.

Mit besonderem Vorteil beinhaltet das Verfahren ein Ausspannen des Werkstücks und ein anschließendes Umformen des Werkstücks.

## Patentansprüche

1. Vorrichtung zum spanenden Bearbeiten eines Werkstücks, nämlich eines Rundstabs und/oder Rundrohrs, unter Berücksichtigung eines vorgegebenen Materialvolumens beinhaltend eine Einspannvorrichtung zum Einspannen des Werkstücks und eine Vorrichtung zum Messen mindestens eines ersten Maßes des Werkstücks beim Einspannen oder im eingespannten Zustand, wobei das mindestens eine erste Maß ein erster Durchmessers des Werkstücks ist, eine Rechenvorrichtung eingerichtet zum Berechnen mindestens eines Sollmaßes, nämlich mindestens eines Solldurchmessers und/oder einer Solllänge, basierend zumindest auf dem gemessenen mindestens einen ersten Maß und dem vorgegebenen Materialvolumen, sodass das Werkstück, wenn es auf das mindestens eine Sollmaß gebracht wurde, das vorgegebene Materialvolumen aufweist, und eine Ansteuervorrichtung sowie Spanmittel, **dadurch gekennzeichnet**, die Ansteuervorrichtung eingerichtet ist, die Spanmittel so anzusteuern, dass eine spanendes Bearbeiten des Werkstücks bis zum Erreichen des mindestens einen Sollmaßes durchgeführt wird, wobei die Vorrichtung eingerichtet ist, das mindestens eine erste Maß über und/oder durch die Bewegung mindestens eines Spannmittels und/oder Spannantriebs der Einspannvorrichtung zu ermitteln, wobei das spanende Bearbeiten ein Bearbeiten der Länge und/oder eines zweiten Durchmessers des Werkstücks ist.

2. Vorrichtung nach Anspruch 1, wobei der erste Durchmesser ein Innendurchmesser ist und/oder das spanende Bearbeiten ein Bearbeiten eines zweiten Durchmessers, nämlich eines Außendurchmessers, ist und/oder der Solldurchmesser ein Außendurchmesser ist.

3. Vorrichtung nach einem der vorstehenden Ansprüche, wobei der erste Durchmesser an den Wandungen gemessen wird, an denen das Einspannen erfolgt.

4. Vorrichtung nach einem der vorstehenden Ansprüche, wobei die Vorrichtung zum spanenden Bearbeiten eines Rundrohrs eingerichtet ist und das Einspannen ein Innenspannen ist.

5. Vorrichtung nach einem der vorstehenden Ansprüche, wobei die Rechenvorrichtung eingerichtet ist, beim Berechnen des mindestens einen Sollmaßes, mindestens einen zweite Durchmesser des Werkstücks, nämlich mindestens einen Innen- und/oder Außendurchmesser, insbesondere als Ober- und/oder Untergrenze der Werkstückausdehnung nach Bringen des Werkstücks auf das mindestens eine Sollmaß, und/oder eine Länge des Werkstücks, insbesondere als Ober- und/oder Untergrenze der Werkstückausdehnung nach Bringen des Werkstücks auf das mindestens eine Sollmaß und/oder als vorgegebenes Endmaß des Werkstücks, und/oder einen Sollaußendurchmesser und/oder eine Solllänge zu berücksichtigen, sodass das Werkstück, wenn es auf das mindestens eine Sollmaß gebracht wurde, das vorgegebene Materialvolumen und insbesondere den Sollaußendurchmesser und/oder die Solllänge aufweist.

6. Vorrichtung nach einem der vorstehenden Ansprüche, wobei die Vorrichtung zum spanenden Bearbeiten eines Rundrohrs eingerichtet ist, wobei das spanende Bearbeiten ein Bearbeiten eines zweiten Durchmessers, nämlich eines Außendurchmessers, ist und ein Sollaußendurchmesser des Rundstabs vorgegeben ist und die Rechenvorrichtung eingerichtet ist, den vorgegebene Sollaußendurchmesser beim Berechnen der Länge zu berücksichtigen.

7. Vorrichtung nach einem der vorstehenden Ansprüche, wobei die Vorrichtung eingerichtet ist, mindestens einen zweiten Durchmesser des Werkstücks und/oder die Länge des Werkstücks im eingespannten Zustand zumessen und die Rechenvorrichtung eingerichtet ist, bei der Berechnung den zweiten Durchmesser des Werkstücks und/oder die Länge des Werkstücks zu berücksichtigen, insbesondere als Ober- und/oder Untergrenze der Werkstückausdehnung nach Bringen des Werkstücks auf das mindestens eine Sollmaß und/oder als vorgegebenes Endmaß des Werkstücks.

8. Vorrichtung nach einem der vorstehenden Ansprüche, wobei die Vorrichtung eingerichtet ist, mehrere erste Durchmesser über die Länge des Werkstücks und/oder mehrere zweite Durchmesser über die Länge des Werkstücks zu bestimmen und insbesondere die Rechenvorrichtung eingerichtet ist, bei der Berechnung des mindestens einen Sollmaßes zu berücksichtigen, insbesondere als Ober- und/oder Untergrenze der Werkstückausdehnung nach Bringen des Werkstücks auf das mindestens eine Sollmaß und/oder als vorgegebenes Endmaß des Werkstücks.

9. Verfahren zum Bearbeiten eines Werkstücks, nämlich eines Rundstabs und/oder Rundrohrs, unter Berücksichtigung eines vorgegebenen Materialvolumens beinhaltend die folgenden Schritte:

  a. Einspannen des Werkstücks und Messen mindestens eines ersten Maßes des Werkstücks beim Einspannen oder im eingespannten Zustand, wobei das mindestens eine erste Maß ein erster Durchmesser des Werkstücks ist,
  b. Berechnen mindestens eines Sollmaßes, nämlich mindestens eines Solldurchmessers und/oder einer Solllänge basierend zumindest auf dem gemessenen mindestens einen ersten Maß und dem vorgegebenen Materialvolumen, sodass das Werkstück, wenn es auf das mindestens eine Sollmaß gebracht wurde, das vorgegebene Materialvolumen aufweist,
  c. Spanendes Bearbeiten des Werkstücks,

  **dadurch gekennzeichnet, dass** das spanende Bearbeiten des Werkstücks bis zum Erreichen des mindestens einen Sollmaßes erfolgt, wobei das mindestens eine erste Maß über und/oder durch die Bewegung mindestens eines Spannmittels und/oder Spannantriebs der Einspannvorrichtung ermittelt wird.

10. Verfahren nach einem der vorstehenden Ansprüche, wobei das spanende Bearbeiten ein Bearbeiten der Länge und/oder eines zweiten Durchmessers des Werkstücks ist.

11. Verfahren nach einem der vorstehenden Ansprüche, wobei der erste Durchmesser ein Innendurchmesser ist und/oder das spanende Bearbeiten ein Bearbeiten eines zweiten Durchmessers, nämlich eines Außendurchmesser, ist und/oder der Solldurchmesser ein Außendurchmesser ist.

12. Verfahren nach einem der vorstehenden Ansprüche,
   wobei beim Berechnen des mindestens einen Sollmaßes, mindestens ein zweiter Durchmesser des Werkstücks, nämlich mindestens ein Innen- und/oder Außendurchmesser, insbesondere als Ober- und/oder Untergrenze der Werkstückausdehnung nach Bringen des Werkstücks auf das mindestens eine Sollmaß und/oder als vorgegebenes Endmaß des Werkstücks, und/oder eine Länge des Werkstücks, insbesondere als Ober- und/oder Untergrenze der Werkstückausdehnung nach Bringen des Werkstücks auf das mindestens eine Sollmaß und/oder als vorgegebenes Endmaß des Werkstücks, und/oder ein Sollaußendurchmesser und/oder eine Solllänge berücksichtigt wird, sodass das Werkstück, wenn es auf das mindestens eine Sollmaß gebracht wurde, das vorgegebene Materialvolumen und insbesondere den Sollaußendurchmesser und/oder die Solllänge aufweist.

13. Verfahren nach einem der vorstehenden Ansprüche, wobei der erste Durchmesser an den Wandungen gemessen wird, an denen das Einspannen erfolgt und/oder das Verfahren zum Bearbeiten eines Werkstücks, nämlich Rundrohrs ist, wobei das Einspannen ein Innenspannen ist.

14. Verfahren nach einem der vorstehenden Ansprüche, wobei mindestens ein zweiter Durchmesser des Werkstücks und/oder die Länge des Werkstücks im eingespannten Zustand gemessen wird.

15. Verfahren nach einem der vorstehenden Ansprüche, wobei mehrere erste Durchmesser über die Länge des Werkstücks und/oder mehrere zweite Durchmesser über die Länge des Werkstücks bestimmt werden.

## Claims

1. A device for machining a workpiece, namely a round bar and/or round tube, taking into account a predetermined material volume, comprising a clamping device for clamping the workpiece and a device for measuring at least one first dimension of the workpiece during clamping or in the clamped state, said at least one first dimension being a first diameter of the workpiece, a calculating device arranged for calculating at least one desired dimension, namely at least one desired diameter and/or a desired length, based at least on the measured at least one first dimension and the predetermined material volume, so that the workpiece, when brought to said at least one desired dimension, has the predetermined material volume, and a control device as well as chip removal means, **characterised in that** the control device is arranged to control the chip removal means in such a way that a chip removal machining of the workpiece is performed until said at least one desired dimension is reached, the device being arranged to determine said at least one first dimension via and/or by the movement of at least one clamping means and/or clamping drive of the clamping device, the chip removal machining being a machining of the length and/or of a second diameter of the workpiece.

2. The device of claim 1, wherein the first diameter is an inside diameter and/or the machining is a machining of a second diameter, namely an outside diameter, and/or the target diameter is an outside diameter.

3. The device according to any one of the preceding claims, wherein the first diameter is measured at the walls where clamping takes place.

4. The device according to one of the preceding claims, wherein the device is set up for machining a round tube and the clamping is an internal clamping.

5. The device according to one of the preceding claims, wherein the calculating device is set up to take into account, when calculating said at least one desired dimension, at least one second diameter of the workpiece, namely at least one inner and/or outer diameter, in particular as an upper and/or lower limit of the workpiece expansion after bringing the workpiece to said at least one desired dimension, and/or a length of the workpiece, in particular as an upper and/or lower limit of the workpiece expansion after the workpiece has been brought to said at least one desired dimension and/or as a predetermined final dimension of the workpiece, and/or a desired outer diameter and/or a desired length, so that the workpiece, when it has been brought to said at least one desired dimension, has the predetermined material volume and in particular the desired outer diameter and/or the desired length.

6. The device according to any one of the preceding claims, wherein the device is arranged for machining a round tube, wherein the machining is a machining of a second diameter, namely an outer diameter, and a nominal outer diameter of the round bar is predetermined and the calculating device is arranged to take the predetermined nominal outer diameter into account when calculating the length.

7. The device according to one of the preceding claims, wherein the device is set up to measure at least one second diameter of the workpiece and/or the length of the workpiece in the clamped state and the calculating device is set up to take the second diameter of the workpiece and/or the length of the workpiece into account in the calculation, in particular as an upper and/or lower limit of the workpiece expansion after bringing the workpiece to said at least one desired dimension and/or as a predeter-mined final dimension of the workpiece.

8. The device according to any one of the preceding claims, wherein the device is arranged to determine a plurality of first diameters over the length of the workpiece and/or a plurality of second diameters over the length of the workpiece and, in particular, the computing device is arranged to take into account in the calculation of said at least one desired dimension, in particular as an upper and/or lower limit of the workpiece expansion after bringing the workpiece to said at least one desired dimension and/or as a predetermined final dimension of the workpiece.

9. A method for machining a workpiece, namely a round bar and/or round tube, taking into account a predetermined volume of material, comprising the following steps:

   a. clamping the workpiece and measuring at least one first dimension of the workpiece when clamped or in the clamped state, wherein said at least one first dimension is a first diameter of the workpiece,
   b. calculating at least one target dimension, namely at least one target diameter and/or a target length, based at least on the measured at least one first dimension and the predetermined material volume, so that the workpiece, when brought to said at least one target dimension, has the predetermined material volume,
   c. machining of the workpiece, **characterised in that** the machining of the workpiece is carried out until said at least one desired dimension is reached, said at least one first dimension being determined via and/or by the movement of at least one clamping means and/or clamping drive of the clamping device.

10. The method according to any one of the preceding claims, wherein the machining is machining of the length and/or a second diameter of the workpiece.

11. The method according to any one of the preceding claims, wherein the first diameter is an inner diameter and/or the machining is a machining of a second diameter, namely an outer diameter, and/or the nominal diameter is an outer diameter.

12. The method according to one of the preceding claims, wherein, when calculating said at least one desired dimension, at least one second diameter of the workpiece, namely at least one inner and/or outer diameter, in particular as an upper and/or lower limit of the workpiece expansion after bringing the workpiece to said at least one desired dimension and/or as a predetermined final dimension of the workpiece, and/or a length of the workpiece, in particular as the upper and/or lower limit of the workpiece expansion after bringing the workpiece to said at least one desired dimension and/or as the predetermined final dimension of the workpiece, and/or a desired outer diameter and/or a desired length are taken into account, so that the workpiece, when it has been brought to said at least one desired dimension, has the predetermined material volume and in particular the desired outer diameter and/or the desired length.

13. The method according to any one of the preceding claims, wherein the first diameter is measured at the walls where the clamping takes place and/or the method is for machining a workpiece, namely round tube, wherein the clamping is an internal clamping.

14. The method according to any of the preceding claims, wherein at least one second diameter of the workpiece and/or the length of the workpiece in the clamped state is measured.

15. The method according to any one of the preceding claims, wherein a plurality of first diameters are determined over the length of the workpiece and/or a plurality of second diameters are determined over the length of the workpiece.


**Revendications**

1. Dispositif d'usinage d'une pièce, à savoir une barre ronde et/ou un tube rond, en tenant compte d'un volume de matériau prédéterminé, comprenant un dispositif de serrage pour serrer la pièce et un dispositif pour mesurer au moins une première dimension de la pièce pendant le serrage ou dans l'état serré, ladite au moins une première dimension étant un premier diamètre de la pièce, un dispositif de calcul agencé pour calculer au moins une dimension souhaitée, à savoir au moins un diamètre souhaité et/ou une longueur souhaitée, sur la base au moins de ladite au moins une première dimension mesurée et du volume de matériau prédéterminé, de sorte que la pièce, lorsqu'elle est amenée à ladite au moins une dimension souhaitée, présente le volume de matériau prédéterminé, et un dispositif de commande ainsi que des moyens d'enlèvement de copeaux, **caractérisé en ce que** le dispositif de commande est agencé pour commander les moyens d'enlèvement de copeaux de telle sorte qu'un usinage par enlèvement de copeaux de la pièce à usiner soit effectué jusqu'à ce que ladite au moins une dimension souhaitée soit atteinte, le dispositif étant agencé pour déterminer ladite au moins une première dimension via et/ou par le mouvement d'au moins un moyen de serrage et/ou un entraînement de serrage du dispositif de serrage, l'usinage par enlèvement de copeaux étant un usinage de la longueur et/ou d'un second diamètre de la pièce à usiner.

2. Dispositif selon la revendication 1, dans lequel le premier diamètre est un diamètre intérieur et/ou l'usinage est un usinage d'un deuxième diamètre, à savoir un diamètre extérieur, et/ou le diamètre cible est un diamètre extérieur.

3. Dispositif selon l'une quelconque des revendications précédentes, dans lequel le premier diamètre est mesuré au niveau des parois où se produit le serrage.

4. Dispositif selon l'une des revendications précédentes, dans lequel le dispositif est configuré pour l'usinage d'un tube rond et le serrage est un serrage interne.

5. Dispositif selon l'une des revendications précédentes, dans lequel le dispositif de calcul est configuré pour prendre en compte, lors du calcul de l'au moins une dimension souhaitée, au moins un second diamètre de la pièce, à savoir au moins un diamètre intérieur et/ou extérieur, notamment comme limite supérieure et/ou inférieure de l'expansion de la pièce après avoir amené la pièce à ladite au moins une dimension souhaitée, et/ou une longueur de la pièce, en particulier comme limite supérieure et/ou inférieure de l'expansion de la pièce après avoir amené la pièce à ladite au moins une dimension souhaitée et/ou comme dimension finale prédéterminée de la pièce, et/ou un diamètre extérieur souhaité et/ou une longueur souhaitée, de sorte que la pièce, lorsqu'elle a été amenée à ladite au moins une dimension souhaitée, présente le volume de matière prédéterminé et en particulier le diamètre extérieur souhaité et/ou la longueur souhaitée.

6. Dispositif selon l'une quelconque des revendications précédentes, dans lequel l'appareil est agencé pour usiner un tube rond, dans lequel l'usinage est un usinage d'un second diamètre, à savoir un diamètre extérieur, et un diamètre extérieur nominal de la barre ronde est prédéterminé et le dispositif de calcul est agencé pour prendre en compte le diamètre extérieur nominal prédéterminé lors du calcul de la longueur.

7.  Dispositif selon l'une des revendications précédentes, dans lequel le dispositif est configuré pour mesurer au moins un second diamètre de la pièce et/ou la longueur de la pièce à l'état serré et le dispositif de calcul est configuré pour prendre en compte le second diamètre de la pièce et/ou la longueur de la pièce dans le calcul, notamment comme limite supérieure et/ou inférieure de la dilatation de la pièce après avoir amené la pièce à ladite au moins une dimension souhaitée et/ou comme dimension finale prédéterminée de la pièce.

8.  Dispositif selon l'une quelconque des revendications précédentes, dans lequel l'appareil est agencé pour déterminer une pluralité de premiers diamètres sur la longueur de la pièce et/ou une pluralité de seconds diamètres sur la longueur de la pièce et, en particulier, le dispositif de calcul est agencé pour prendre en compte dans le calcul de ladite au moins une dimension souhaitée, notamment comme limite supérieure et/ou inférieure de l'expansion de la pièce après avoir amené la pièce à ladite au moins une dimension souhaitée et/ou comme dimension finale prédéterminée de la pièce.

9.  Procédé d'usinage d'une pièce, à savoir une barre ronde et/ou un tube rond, en tenant compte d'un volume de matière prédéterminé, comprenant les étapes suivantes:

    a. serrer la pièce et mesurer au moins une première dimension de la pièce lorsqu'elle est serrée ou à l'état serré, dans lequel ladite au moins une première dimension est un premier diamètre de la pièce,
    b. le calcul d'au moins une dimension cible, à savoir au moins un diamètre cible et/ou une longueur cible, sur la base d'au moins une première dimension mesurée et du volume de matériau prédéterminé, de sorte que la pièce, lorsqu'elle est amenée à ladite au moins une dimension cible, présente le volume de matériau prédéterminé,
    c. usinage de la pièce, **caractérisé en ce que** l'usinage de la pièce est effectué jusqu'à ce que ladite au moins une dimension souhaitée soit atteinte, ladite au moins une première dimension étant déterminée via et/ou par le mouvement d'au moins un moyen de serrage et/ou un entraînement de serrage du dispositif de serrage.

10. Procédé selon l'une quelconque des revendications précédentes, dans lequel l'usinage est un usinage de la longueur et/ou d'un second diamètre de la pièce.

11. Procédé selon l'une quelconque des revendications précédentes, dans lequel le premier diamètre est un diamètre intérieur et/ou l'usinage est un usinage d'un second diamètre, à savoir un diamètre extérieur, et/ou le diamètre nominal est un diamètre extérieur.

12. Procédé selon l'une des revendications précédentes, dans lequel, lors du calcul de ladite au moins une dimension souhaitée, on prend en compte au moins un second diamètre de la pièce, à savoir au moins un diamètre intérieur et/ou extérieur, en particulier comme limite supérieure et/ou inférieure de l'expansion de la pièce après avoir amené la pièce à ladite au moins une dimension souhaitée et/ou comme dimension finale prédéterminée de la pièce, et/ou une longueur de la pièce, en particulier comme limite supérieure et/ou inférieure de l'expansion de la pièce après avoir amené la pièce à ladite au moins une dimension souhaitée et/ou comme dimension finale prédéterminée de la pièce, et/ou un diamètre extérieur souhaité et/ou une longueur souhaitée sont pris en compte, de sorte que la pièce, lorsqu'elle a été amenée à ladite au moins une dimension souhaitée, présente le volume de matériau prédéterminé et en particulier le diamètre extérieur souhaité et/ou la longueur souhaitée.

13. Procédé selon l'une quelconque des revendications précédentes, dans lequel le premier diamètre est mesuré au niveau des parois où le serrage a lieu et/ou le procédé est destiné à l'usinage d'une pièce, à savoir un tube rond, dans lequel le serrage est un serrage interne.

14. Procédé selon l'une quelconque des revendications précédentes, dans lequel on mesure au moins un second diamètre de la pièce et/ou la longueur de la pièce à l'état serré.

15. Procédé selon l'une quelconque des revendications précédentes, dans lequel une pluralité de premiers diamètres sont déterminés sur la longueur de la pièce et/ou une pluralité de seconds diamètres sont déterminés sur la longueur de la pièce.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1983393 A2
- US 2009143885 A1
- CN 105964873
- EP 0498900 A1